# EUROPEAN PATENT SPECIFICATION

(11) **EP 2 443 204 B1**
(45) Date of publication and mention of the grant of the patent: **07.08.2019**
(21) Application number: 10725149.8
(22) Date of filing: 11.06.2010
(51) Int. Cl.: C09D 5/08, C23F 11/10, C23F 11/18, C23C 18/12

(54) **COATING COMPOSITIONS INCLUDING CERAMIC PARTICLES**
BESCHICHTUNGSZUSAMMENSETZUNGEN MIT KERAMIKPARTIKELN
COMPOSITIONS DE REVÊTEMENT COMPRENANT DES PARTICULES DE CÉRAMIQUE

(30) Priority: 15.06.2009 FR 0953971
(43) Date of publication of application: 25.04.2012
(73) Proprietor: AIRBUS (SAS), 31700 Blagnac (FR); Ceramisphere PTY Limited, Lucas Heights, New South Wales NSW 2234 (AU)
(72) Inventor: KONG, Linggen, Narwee, New South Wales NSW 2209 (AU); FINNIE, Kim Suzanne, Chatswood, New South Wales NSW 2067 (AU); BARBE, Christophe, Five Dock, New South Wales NSW 2046 (AU); CAMPAZZI, Elisa, F-92100 Boulogne Billancourt (FR); CALDEIRA, Nancy Manuela, F-92200 Neuilly sur Seine (FR); VILLATTE, Martine, F-92500 Rueil Malmaison (FR)
(74) Representative: Gicquel, Olivier Yves Gérard
(86) International application number: PCT/EP2010/058239
(87) International publication number: WO 2010/146001

(56) References cited:
- WO-A2-2009/069111
- DE-A1-102005 017 088
- FR-A1- 2 911 341
- US-B1- 6 605 365

## Description

The present invention relates to coating compositions, especially for metallic devices. The present invention more specifically relates to coating compositions for aircrafts.

The structure of an aircraft is commonly metallic, especially composed of aluminium alloys. A modern aircraft coating system combines the need to provide protection against corrosion and the environment, decoration or camouflage and a good mechanical adhesion. One of the typical coating systems is composed of three individual layers.

A bottom layer may be an anodizing layer or a conversion coating. This bottom layer is typically formulated using an inorganic matrix. It provides corrosion protection and improves adhesion between a metallic substrate, which is the aircraft structure, and a middle layer.

A middle layer, also called primer, typically includes a pigmented organic resin matrix. The primer is usually the principal provider of corrosion protection of the aircraft structure.

Recently, much interest has been focused on the development of hybrid organic-inorganic coatings, especially primers. These hybrid coatings are based on the sol-gel technology. This technology provides a low-temperature route to the preparation of thin coatings, which are readily applied to most metallic substrates. Sol-gel coatings may provide an efficient passive protection against corrosion. Such sol-gel coatings are described for example in US 5 939 197 and US 6 579 472.

The primer is typically covered with a top coating, which serves as the main barrier against environmental influences and provides the aircraft with decoration and camouflage. The top coating is typically formulated using a polyurethane/polyol resin.

In the presence of water, oxygen and/or hydrogen, the aluminium alloys forming the structure of an aircraft are submitted to corrosion reactions. The corrosion of the alloy may cause important damages to the aircraft structure.

To prevent this happening, two strategies are employed. The first strategy is passive protection. It uses a barrier coating to suppress the cathodic reaction by limiting the diffusion of corroding agents, such as water and oxygen, to the aluminium surface.

The second strategy is active corrosion protection. For example, corrosion inhibitors are introduced in the system and undergo reduction at the active corrosion site. The product of this reduction is the precipitation of an insoluble oxide coating, which provides a barrier to further permeation of water, oxygen or electrolyte.

However, only the combination of both these strategies can give reliable long-term corrosion protection of metallic structures, which are in constant contact with electrolytes or a humid environment.

Due to its strong oxidation properties, hexavalent chromium or chromate Cr(VI) is currently the most effective way to inhibit corrosion of aluminium alloys. However, these strong oxidation properties also make hexavalent chromium environmentally unsafe. This compound is especially known to be carcinogenic.

Therefore, there is a need to provide coating compositions with low toxicity, while maintaining anticorrosive and/or protective characteristics of existing coating compositions.

In order to avoid contact of a toxic compound with its environment, it is known to introduce it in a composition in an encapsulated form.

Another way of avoiding the toxicity of the corrosion inhibitor is to use chromate-free inhibitors. One or more of these inhibitors have then to be introduced in selected coating compositions, without damaging the integrity and while preserving the intrinsic characteristics of said compositions. Such compositions may be inorganic, for example conversion coatings. They also may be hybrid organic/inorganic compositions, such as sol-gel coatings. They also may be organic compositions, such as primers or paints.

However, especially in sol-gel coatings, the direct addition of high levels of corrosion inhibitor in a coating composition often results in detrimental properties of the resulting coating.

One way to circumvent these problems is to use releasable encapsulated corrosion inhibitors. The isolation of the inhibitor from the coating materials improves the overall mechanical integrity of the coating. US 6 933 046 describes corrosion inhibitors chemically anchored to particles with an aluminium oxyhydroxide surface.

However, a difficulty lies in controlling the release of the corrosion inhibitor, in order to have a sufficient amount of available inhibitor when the coated metallic device is placed in corrosive conditions. In US 6 933 046, the release of the corrosion inhibitors is triggered by a high pH, which does not correspond to the general corrosion conditions of aluminium alloys.

The release of corrosion inhibitor also has to last during the lifetime of a metallic device, to avoid the necessity of frequent applications of coating on the device. However, the surface anchoring of the particles described in US 6 933 046 is limited to rather low levels of inhibitors. In addition, anchoring organic inhibitors on particle surfaces leads to more hydrophobic particle surfaces, which can be detrimental to the coating structure, similarly as directly adding organic inhibitors into coatings.

M.L. Zheludkevich et al. (Chemistry of Materials, 2007, 19, 402-411) describe the incorporation in coatings of corrosion inhibitors in silica particles coated with polyelectrolyte layers. This technology requires the manufacturing of the empty particles and the postloading of the inhibitors afterwards. A consequence is that the release rate is the same as the adsorption rate and is purely controlled by the solubility of the inhibitor. Another consequence is a rather low level of encapsulated inhibitor. Moreover, some free inhibitors always remain at the surface of the particles after post-loading, which leads to interaction with the coating.

In addition, it is important that the mechanical properties of the encapsulating particles allow them to resist destruction during the formulation of the compositions. These compositions, such as paints, may involve grinding or mixing steps. The above mentioned particles do not display such mechanical properties and are therefore unsuitable to be incorporated in these compositions.

It is known to encapsulate active molecules inside ceramic particles, especially silica particles, and control their subsequent release. Such ceramic particles are especially described in W02001/62232 and W02006/133519. Different active molecules have been incorporated to these particles, such as oncology drugs, cosmeceuticals, neutraceuticals, biocides and industrial enzymes. High amounts of releasable compounds have been successfully encapsulated through this method.

The present invention relates to the use of such ceramic particles to encapsulate corrosion inhibitors, to the incorporation of said particles in coating compositions and to the controlled release of the corrosion inhibitors.

It has been found that a wide range of inorganic and organic corrosion inhibitors can be incorporated in such ceramic particles.

It has also been made possible to trigger the release of corrosion inhibitors by the presence of water. As said presence of water is one of the corrosion conditions, the corrosion inhibitors are advantageously released when they are needed. The ceramic particles are able to provide long-lasting release of the corrosion inhibitors. Therefore, the present invention provides coating compositions with self-healing properties.

The ceramic particles according to the invention are rigid spheres. Their mechanical resistance is sufficient to undergo the preparation conditions of coatings such as paints.

An aspect of the present invention relates to ceramic particles, having at least one releasable active material substantially homogeneously distributed throughout each particle, characterized in that at least one of the said active material(s) is a corrosion inhibitor.

This homogeneous distribution results in a relatively stable release profile of the inhibitors, even after a formulation step involving grinding. On the contrary, capsules or other core shell particles such as described in the anterior art release their content instantly when the shell is ruptured.

According to a preferred embodiment of the invention, a corrosion inhibitor is an inorganic compound, more preferably a cerium salt or a molybdenum salt or a mixture thereof. According to a more preferred embodiment of the invention, a corrosion inhibitor is selected from the group consisting of Ce(NO₃)₃, Ce₂(SO₄)₃, Ce(CH₃CO₂)₃, Ce₂(MoO₄)₃, Na₂MoO₄ and mixtures thereof.

According to a preferred embodiment of the invention, a corrosion inhibitor is an organic or an organometallic compound. According to a more preferred embodiment of the invention, a corrosion inhibitor is selected from the group consisting of benzotriazole, 2-mercaptobenzothiazole, 8-hydroxyquinoline, 10-methylphenothiazine, cerium (III) salicylate, cerium (III) 2,4-pentanedionate, their derivatives and mixtures thereof.

The document US6605365 describe a surface treatment, especially for titanium and aluminium alloys, which forms a pigmented sol-gel film covalently bonded on the metal surface to produce desired colour, gloss, reflectivity, electrical conductivity, emissivity, or a combination thereof usable over a wide temperature range.

The document DE102005017088 discloses a process for applying a protective coating to heat sensitive substrates that uses a sol-gel layer based on organosilanes and zirconium type oxides activated by localized heating, e.g. via UV illumination to form nano pores in the primer layer which retain corrosion inhibiters such as molybdates, manganates etc.

The document WO2009/069111 describes a sol-gel coating composition comprising a hydrolysed organosilane, an organometallic precursor and a corrosion inhibitor, wherein the corrosion inhibitor is a chelator for the organometallic precursor.

A composition for inhibiting corrosion, comprises aminosilane (A1), azole compound (B1) and a compound (C1) comprising carboxylic acids or fatty amines, in combination with an active ingredient is disclosed in the document FR2911341.

The present invention relates to the use of such ceramic particles to encapsulate corrosion inhibitors, to the incorporation of said particles in coating compositions and to the controlled release of the corrosion inhibitors.

It has been found that a wide range of inorganic and organic corrosion inhibitors can be incorporated in such ceramic particles.

It has also been made possible to trigger the release of corrosion inhibitors by the presence of water. As said presence of water is one of the corrosion conditions, the corrosion inhibitors are advantageously released when they are needed. The ceramic particles are able to provide long-lasting release of the corrosion inhibitors. Therefore, the present invention provides coating compositions with self-healing properties.

The ceramic particles according to the invention are rigid spheres. Their mechanical resistance is sufficient to undergo the preparation conditions of coatings such as paints.

An aspect of the present invention relates to ceramic particles, having at least one releasable active material substantially homogeneously distributed throughout each particle, characterized in that at least one of the said active material(s) is a corrosion inhibitor.

This homogeneous distribution results in a relatively stable release profile of the inhibitors, even after a formulation step involving grinding. On the contrary, capsules or other core shell particles such as described in the anterior art release their content instantly when the shell is ruptured.

According to a preferred embodiment of the invention, a corrosion inhibitor is an inorganic compound, more preferably a cerium salt or a molybdenum salt or a mixture thereof. According to a more preferred embodiment of the invention, a corrosion inhibitor is selected from the group consisting of Ce(N03)3, Ce2(S04)3, Ce(CH3CO2)3, Ce2(Mo04)3, Na₂MoO₄ and mixtures thereof.

According to a preferred embodiment of the invention, a corrosion inhibitor is an organic or an organometallic compound. According to a more preferred embodiment of the invention, a corrosion inhibitor is selected from the group consisting of benzotriazole, 2-mercaptobenzothiazole, 8-hydroxyquinoline, 10-methylphenothiazine, cerium (III) salicylate, cerium (III) 2,4-pentanedionate, their derivatives and mixtures thereof.

According to a preferred embodiment of the invention, the ceramic particles comprise an oxide selected from the group consisting of silica, organo-silica, zirconia, alumina and titania. More preferably, the ceramic particles comprise silica or organo-silica.

According to a preferred embodiment of the invention, the ceramic particles comprise between 0.1% and 45% w/w of corrosion inhibitor.

According to a preferred embodiment of the invention, the ceramic particles are prepared using a sol-gel process.

According to a preferred embodiment of the invention, the average size of the ceramic particles is comprised between 10 nm and 100 pm.

According to a preferred embodiment of the invention, the release of the corrosion inhibitor from the ceramic particles is triggered by the presence of water.

Another aspect of the present invention relates to a coating composition, especially for metallic devices such as aircrafts, said composition comprising ceramic particles, said particles having at least one releasable active material substantially homogeneously distributed throughout each particle.

This active material may be a corrosion inhibitor. However, ceramic particles containing other releasable materials may be incorporated in the coating composition. For example, ceramic particles containing biocides for anti-fouling may be incorporated in the coating composition. Such biocide-loaded ceramic particles are described in W02006/133519.

According to a preferred embodiment of the invention, at least one of the said active material(s) distributed throughout each particle is a corrosion inhibitor. According to a more preferred embodiment of the invention, the ceramic particles are as described hereabove.

The compositions according to the invention may be mono- or pluri-components. Said compositions may be water- or organic solvent-based.

According to a preferred embodiment of the invention, the coating composition is a hybrid organic/inorganic sol-gel coating. More preferably, the coating composition contains at least an organic compound selected among the epoxy silanes and/or an inorganic compound selected among the zirconium alkoxides.

According to a preferred embodiment of the invention, the coating composition contains an organic resin. More preferably, the organic resin is selected from the group consisting of epoxy, polyurethane, polyamine, vinyl, nitro-vinylic, acrylic, nitro-acrylic, vinyl-acrylic, phenolic, aminoacrylate, isocyanate, polyester, silicone, polyamide, alkyde and chlorinated resins, and mixtures thereof.

According to a preferred embodiment of the invention, the coating composition is formulated using an inorganic matrix.

According to a preferred embodiment of the invention, the coating 10 composition does not contain toxic amounts of hexavalent chromium. More specifically, according to a preferred embodiment of the invention, the coating composition contains less than 0.01% w/w of hexavalent chromium. Another aspect of the present invention relates to a use of a coating composition as described hereabove, to provide a metallic device with a protection against corrosion.

The present invention will be better understood in the light of the following description, drawings and examples. These examples are intended for purposes of illustration only and do not limit the scope of the invention.

The drawings show the following :
- Fig. 1 : a cross-sectional scheme of a metallic substrate covered with a coating system according to an embodiment of the invention, said coating system including a breach.
- Fig. 2 : a typical reaction scheme of a sol-gel process.

An object of the present invention is preventing the corrosion of metallic devices, especially aircraft structures. An aircraft structure is often made of aluminium alloy.

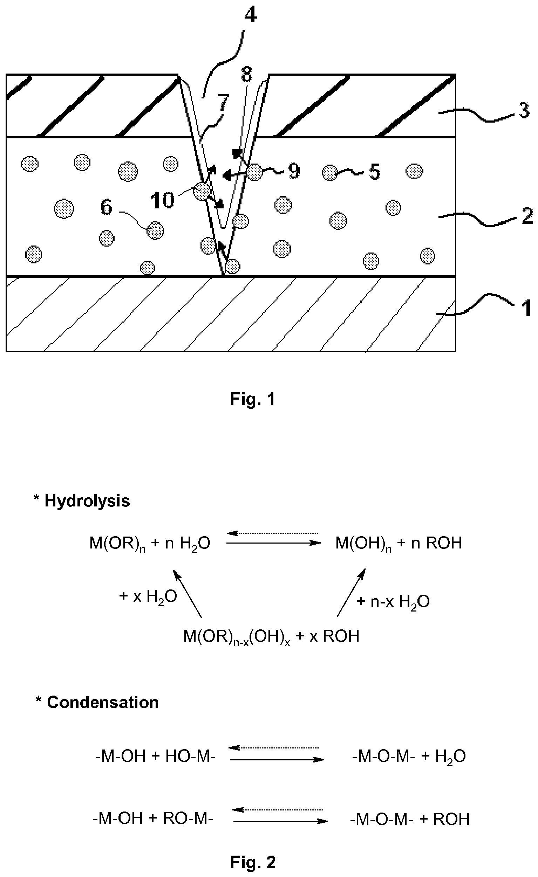

Fig. 1 shows a metallic substrate 1, which is part of an aircraft structure. The substrate 1 is made of aluminium alloy. The substrate 1 is covered with a primer 2. In the example shown on Fig. 1, the primer 2 is a hybrid organic/inorganic sol-gel coating. Due to its hybrid nature, the adhesion of the primer 2 to the metallic substrate 1 is good enough to spare the use of an inorganic bottom layer, such as an anodizing layer or a conversion coating.

The primer 2 is covered with a top coating 3, such as a paint with an organic matrix.

In case of a breach 4 in the coating system, the aluminium alloy of the substrate 1 becomes in contact with the environmental conditions, which may induce corrosion.

The main electrochemical reactions governing the corrosion of aluminium alloyed with copper or zinc are represented below :

Al → Al³⁺ + 3e⁻ (I)

4e⁻ + O₂ + 2H₂O → 4OH⁻ (II)

2H⁺ + 2e⁻ → H₂ (g) (III)

Contact of the alloy with water and oxygen or hydrogen completes the creation of a galvanic cell between the anodic sites (aluminium) and the cathodic sites (copper or zinc inclusions), so that the metal oxidation takes place.

In order to prevent corrosion, it is known to use a primer 2 with self-healing properties, that is to say with anti-corrosion properties.

Hexavalent chromium is an effective corrosion inhibitor, widely used in the background art. It is introduced in coating compositions, especially in the form of strontium chromate (SrCrO₄) or zinc chromate (H₂CrO₄Zn) pigments. Those pigments are soluble in water, which allows Cr⁶⁺ ions to diffuse quickly to active corrosion sites. The strong oxidizing power of Cr⁶⁺ allows its rapid reduction to Cr³⁺ and the corresponding precipitation of an insoluble passivating oxo-hydroxide layer.

However, the same oxidizing properties of Cr⁶⁺ make it severely toxic and carcinogenic.

One of the aims of the present invention is to provide coating compositions with low toxicity, while maintaining anticorrosive and/or protective characteristics of existing coating compositions.

A solution would be to use corrosion inhibitors less toxic than hexavalent chromium, while able to fulfil the same requirements, especially in terms of oxidizing power, long-term behaviour and mobility. Some known inhibitors appear to have such characteristics. Some of these inhibitors are inorganic, for example rare-earths or elements from Group V. Some of these inhibitors are organic, such as azoles and quinones. Inorganic inhibitors and organic inhibitors may have different anticorrosion mechanisms.

The selected inhibitors have then to be introduced in coating compositions. It is known that direct interaction between a corrosion inhibitor and the matrix of a composition may cause chemical reactions and the degradation of the matrix structure.

This problem is solved by the present invention, through the incorporation and homogeneous distribution of the corrosion inhibitors in ceramic particles 5. In the example shown on Fig. 1, the particles 5 are incorporated in the primer 2. It is also possible to incorporate them in the top coating 3.

The ceramic particles 5 are porous. Some of the pores 6 contain active materials, such as one or more corrosion inhibitors. A single particle may contain one corrosion inhibitor or a mixture of two or more corrosion inhibitors.

In the presence of a liquid, such as water, the active materials are released from the pores by solubilisation into said liquid. The release rate especially depends on the size of the pores 6 and on the nature of the considered active material, specifically on the solubility of said material in said liquid.

In the usual conditions of use of an aircraft, the corrosion of the substrate 1 only occurs in the presence of water 7 in contact with said substrate 1. However, the presence of said water triggers the release 8 of the corrosion inhibitors from the pores 6 of the particles 5.

Therefore, according to the present invention, the corrosion conditions trigger the release of the corrosion inhibitors. This characteristic makes the present invention a very efficient self-healing anticorrosion coating system.

Moreover, it is advantageous that the corrosion inhibitor is released by diffusion into water. In the prior art are known particles where the active material is released by mechanical destruction of the particle. Therefore, in case of a crack, only the particles on the crack path are able to release their active material.

On the contrary, in the present invention, not only the particles 10 on the breach path but also the particles 9 in the vicinity of the breach 4 are able to release a corrosion inhibitor. Therefore, more active material can be released than in the prior art, which improves the efficiency of the corrosion protection.

In order to modulate the release rate of the corrosion inhibitors, it is possible to use coating compositions containing more than one inhibitor.

It is especially interesting to use inhibitors having different solubilities in water. The release of a component with a low solubility in water may be slower but more long-lasting than the release of a component with a high solubility in water.

For example, it may be advantageous to use a mixture of organic and inorganic corrosion inhibitors.

The coating composition according to the invention may include different kinds of ceramic particles, each of said kind including a different inhibitor. According to the invention, a coating composition may also include particles containing a mixture of inhibitors.

According to a preferred embodiment of the invention, an inorganic corrosion inhibitor is a cerium salt and/or a molybdenum salt. According to a more preferred embodiment of the invention, an inorganic corrosion inhibitor is selected from the group consisting of Ce(NO₃)₃, Ce₂(SO₄)₃, Ce(CH₃CO₂)₃, Ce₂(MoO₄)₃, Na₂MoO₄ and mixtures thereof.

According to a preferred embodiment of the invention, an organic corrosion inhibitor is selected from the group consisting of benzotriazole, 2-mercaptobenzothiazole, 8-hydroxyquinoline, 10-methylphenothiazine, their derivatives and mixtures thereof.

According to another preferred embodiment of the invention, a corrosion inhibitor is an organometallic compound, especially an organoceric compound. According to a more preferred embodiment of the invention, an organometallic corrosion inhibitor is selected from the group consisting of cerium (III) salicylate, cerium (III) 2,4-pentanedionate (or cerium acetylacetonate) and mixtures thereof.

Suitable processes to prepare the ceramic particles according to the invention depend on the nature of the inhibitors. For water soluble inhibitors such as cerium nitrate, an encapsulation process may involve the preparation of a water-in-oil emulsion with the water soluble inhibitor dissolved in the water pools of the emulsion. This step may be followed by the addition of a ceramic precursor, which migrates to the water droplet and hydrolyses. The emulsion may then be destabilised by the addition of a polar solvent, which results in the production of submicron microporous particles containing the inhibitor encapsulated inside. Such processes are described in WO2006/050579.

For inhibitors who are poorly soluble in water, such as 8-hydroxyquinoline, an encapsulation process may involve the preparation of an oil-in-water emulsion with the inhibitor dissolved in the oil droplets. A hydrophobic precursor, typically an alkoxy silane, more typically a tri-alkoxy silane, may be added to the emulsion. This may be followed by the addition of a catalyst, typically an amino-silane, which catalyses the condensation of the other precursor and leads to the production of submicron microporous particles. Such processes are described in WO2006/133519.

As described in WO2001/62232, WO2006/050579 and WO2006/133519, these processes also allow the incorporation in ceramic particles of many different active materials, such as biocides. The resulting ceramic particles may also be incorporated in coating compositions according to the invention.

According to a preferred embodiment of the invention, the ceramic particles are prepared using a sol-gel process. Sol-gel processing is based on the hydrolysis and condensation of appropriate precursors, such as alkoxides. A typical reaction scheme is represented on Fig. 2.

According to a preferred embodiment of the invention, the ceramic particles comprise an oxide selected from the group consisting of silica, organo-silica, zirconia, alumina and titania. More preferably, the ceramic particles comprise silica or organo-silica.

The ceramic particles according to the invention are compatible with organic matrix as well as with inorganic matrix or with hybrid organic/inorganic matrix. Therefore, the ceramic particles according to the invention are easily incorporated in several kinds of coating compositions.

Apart from the anticorrosion properties, an advantage of the incorporation of ceramic particles in coating compositions is to increase the scratch resistance of said compositions, by the hardness of said particles.

Moreover, the mechanical resistance of said particles makes them compatible with paint production processes, which may involve grinding or mixing steps.

It is possible to modulate the size of the ceramic particles. For example, in the case of a process involving a water soluble inhibitor, the size of the particles may be modulated by changing the ratio surfactant/polar solvent, said surfactant being part of the water-in-oil emulsion. Therefore, the size of the particles may be suited to different coating thicknesses. According to a preferred embodiment of the invention, an average diameter of the ceramic particles is comprised between 10 nm and 100 µm.

It is also possible to modulate the size of the pores 6, in order to control the release rate of corrosion inhibitors. The size of the pores especially depends on a range of processing parameters related to the sol-gel chemistry used in the process, such as the precursor/water molar ratio, the catalyst used for the sol-gel reaction, the pH, amongst others.

According to a preferred embodiment of the invention, the ceramic particles comprise between 0.1% and 45% w/w of corrosion inhibitor. In order to provide coating compositions with long-lasting anticorrosion properties, it may be necessary to incorporate large amounts of particles in the coating compositions.

It is possible to prepare coating compositions highly loaded in ceramic particles without destabilizing the matrix. For example, coating compositions according to the invention may include 50% w/w of ceramic particles.

It is also possible to incorporate one or more free corrosion inhibitors to a coating composition according to the invention, providing that the matrix is not degraded by interactions with said free corrosion inhibitors. These free inhibitors add an instant anticorrosion effect to the long-lasting anticorrosion effect of the encapsulated inhibitors.

Example of coating compositions according to the invention are paints, sol-gel coatings, varnish, lacquers or sealants. Compositions according to the invention may also been used for making protective films such as adhesive films.

The coating compositions according to the invention may be applied on metallic substrates, such as aluminium alloys, by usual techniques of the anterior art, such as spraying or dip coating.

Some embodiments of the invention are more precisely described in the following examples :

### Example I : Synthesis of an organic-inorganic sol-gel matrix

48 g of glacial acetic acid were added under stirring to zirconium (IV) propoxide solution (105 g, 70% in 1-propanol). After slow addition of deionised water (602 g), the solution was stirred until homogeneous (1 hour). 245 g of 3-glycidoxypropyl-trimethoxysilane (GPTMS) were then added and the solution was stirred for another hour. The resulting solution is called the sol-gel matrix solution in the following examples and is used as a representative coating solution.

### Example II : Synthesis of the sol-gel particles containing corrosion inhibitors

### Example II.1 : Inorganic inhibitor encapsulation

A surfactant solution was prepared by mixing a surfactant NP-5 (160 mmol) and cyclohexane (800 mL). 17.28 mL of a solution of Ce(NO₃)₃ in water (80 mg/mL of Ce³⁺) was added into the surfactant solution, which was then stirred for 30 minutes to form a transparent water-in-oil microemulsion. Tetramethyl orthosilicate (TMOS, 144 mmol) was added to the above microemulsion which was then stirred for 10 minutes, before the addition of (3-Aminopropyl)triethoxysilane (APTES, 3.6 mmol). The synthesis was aged overnight (16-24 hours) at 30 °C. After decreasing the temperature to 20 °C, 960 mL of acetone was added into the mixture and stirred for 30 minutes to destabilise the emulsion. The mixture was then centrifuged for 25 minutes at 5000 rpm. The supernatant was decanted and the particles were collected. The particles were then either freeze-dried or suspended in a concentrated slurry, as required for the following step.

### Example II.2 : Organic inhibitor encapsulation

100 g of organic inhibitor 8-hydroxyquinoline (8HQ) was dissolved in 65 mL of THF, to which 800 mmol of phenyltrimethoxysilane (PTMS) were added. The solution was then mixed with a homogeneous aqueous surfactant solution (378 g NP-9 in 4 litres of water). After stirring for 30 minutes, a solution of hydrolysed APTES (prepared by mixing of 480 mmol APTES and 116 mL water) was added to the oil-in-water emulsion. The phenylsiloxane particles were formed upon aging overnight (16-22 hours) at 20 °C. After aging, the system was diluted by water (1:1 v/v) and centrifuged for 25 minutes at 8500 rpm, and the particles were collected. The supernatant was decanted and the particles were collected. The particles were then either freeze-dried or resuspended into a concentrated slurry, as required for the following step.
A similar process was used to encapsulate 2-mercaptobenzothiazole (MBT).

### Example III : Incorporation of ceramic particles in an organic-inorganic sol-gel matrix

The ceramic particles were incorporated in a sol-gel matrix in the form of slurries or water-dispersed suspensions. The preparations used in the following examples, incorporating various ceramic particles, are described in Table I :

**Table I**

| **Preparation** | **Encapsulated corrosion inhibitor** | **Solid wt% of inhibitor** | **Loading wt% of inhibitor** |
|---|---|---|---|
| A1 : Slurry | 8-hydroxyquinoline | 44 | 9 |
| A2 : water dispersion | (8HQ) | | |
| B1 : slurry | 2-mercaptobenzothiazole | 21 | 10 |
| B2: water dispersion | (MBT) | | |
| C : slurry | Ce(NO₃)₃ | 12 | 3 |

### Example III.1 :

12 g of preparation A1 was mixed with 140 g of the sol-gel matrix solution of Example I. The resulting suspension was stirred during 15 min. An orange, homogenous and stable suspension was obtained.

The suspension was applied onto a surface of aluminium alloy 2024T3, prepared by usual methods. The application was made by dip coating, with a withdrawal speed between 10 and 50 cm.min⁻¹, particularly between 20 and 40 cm.min⁻¹.

A thermal curing may be conducted between 70 °C and 210 °C. Thermal curings were conducted between 100 °C and 140 °C. The curing time depends on the temperature and it ranges from 10 min to 10 hours.

The obtained coatings were slightly yellow, homogeneous, with a range of thickness between 2 and 14 µm, particularly between 5 and 10 µm, depending on the processing parameters.

### Example III.2 :

20 g of preparation B2 was mixed with 140 g of the sol-gel matrix solution of Example I. The resulting suspension was stirred during 15 min. A whitish, homogenous and stable suspension was obtained.

The suspension was applied onto a surface of aluminium alloy 2024T3, prepared by usual methods. The application was made by dip coating, with a withdrawal speed between 10 and 50 cm.min⁻¹, particularly between 20 and 40 cm.min⁻¹. The thermal curing conditions were the same as those given in Example III.1.

The obtained coatings were transparent, homogeneous, with a range of thickness between 2 and 14 µm, particularly between 5 and 10 µm, depending on the processing parameters.

### Example III.3 :

18 g of preparation A2 and 77.5 g of preparation B2 were mixed with 140 g of the sol-gel matrix solution of Example I. The resulting suspension was stirred during 15 min. A white, homogenous and stable suspension was obtained.

The suspension was applied onto a surface of aluminium alloy 2024T3, prepared by usual methods. The application was made by dip coating, with a withdrawal speed between 10 and 50 cm.min⁻¹, particularly between 20 and 40 cm.min⁻¹. The thermal curing conditions were the same as those given in Example III.1.

The obtained coatings were yellow, homogeneous, with a range of thickness between 5 and 20 µm, particularly between 10 and 15 µm, depending on the processing parameters.

### Example III.4 :

103.3 g of preparation B1 and 38 g of preparation C were mixed with 140 g of the sol-gel matrix solution of Example I. The resulting suspension was stirred during 15 min. A white, homogenous and stable suspension was obtained.

The suspension was applied onto a surface of aluminium alloy 2024T3, prepared by usual methods. The application was made by dip coating, with a withdrawal speed between 10 and 50 cm.min⁻¹, particularly between 20 and 40 cm.min⁻¹. The thermal curing conditions were the same as those given in Example III.1.

The obtained coatings were transparent, homogeneous, with a range of thickness between 5 and 25 µm, particularly between 15 and 20 µm, depending on the processing parameters.

### Example III.5 :

12.5 g of preparation A1, 51.7 g of preparation B1 and 45.8 g of preparation C were mixed with 140 g of the sol-gel matrix solution of Example I. The resulting suspension was stirred during 15 min. A yellow, homogenous and stable suspension was obtained.

The suspension was applied onto a surface of aluminium alloy 2024T3, prepared by usual methods. The application was made by dip coating, with a withdrawal speed between 10 and 50 cm.min⁻¹, particularly between 20 and 40 cm.min⁻¹. The thermal curing conditions were the same as those given in Example III.1.

The obtained coatings were yellow, homogeneous, with a range of thickness between 2 and 15 µm, particularly between 5 and 10 µm, depending on the processing parameters.

### Example IV : Performance tests

### Example IV.1 : Adhesion test (ISO 2409)

The coatings according to Example III.1, III.2, III.3, III.4, and III.5 were subjected to an adhesion test to ISO 2409. The adhesion was satisfying.

### Example IV.2 : Neutral Salt Spray Test (ISO 9227)

The coatings according to Example III.1, III.2, III.3, III.4, and III.5 were subjected to a neutral salt spray test to ISO 9227 (336h). All the coatings showed a satisfying corrosion resistance in terms of barrier effect and self-healing.

## Claims

1. A coating composition comprising porous ceramic particles, said particles comprising pores having at least two corrosion inhibitors substantially homogeneously distributed throughout each particle, said corrosion inhibitors being releasable from the pores in the presence of a liquid, by solubilisation into said liquid, wherein the ceramic particles are prepared using a sol-gel process for encapsulating the corrosion inhibitors and wherein the corrosion inhibitors have different solubilities in water.

2. A coating composition according to claim 1, **characterized in that** a corrosion inhibitor is an inorganic compound.

3. A coating composition according to claim 2, **characterized in that** a corrosion inhibitor is a cerium salt and/or a molybdenum salt.

4. A coating composition according to claim 3, **characterized in that** a corrosion inhibitor is selected from the group consisting of Ce(NO₃)₃, Ce₂(SO₄)₃, Ce(CH₃CO₂)₃, Ce₂(MoO₄)₃, Na₂MoO₄ or mixtures thereof.

5. A coating composition according to one of the claims 1 to 4, **characterized in that** a corrosion inhibitor is an organic or an organometallic compound.

6. A coating composition according to claim 5, **characterized in that** a corrosion inhibitor is selected from the group consisting of benzotriazole, 2-mercaptobenzotriazole, 8-hydroxyquinoline, 10-methylphenothiazine, cerium (III) salicylate, cerium (III) 2,4-pentanedionate, their derivatives, and mixtures thereof.

7. A coating composition according to one of the preceding claims, **characterized in that** they comprise particles of oxide selected from a group that includes silica, organo-silica, zirconia, alumina and titania.

8. A coating composition according to claim 7, **characterized in that** it contains particles prepared from silica or organo-silica.

9. A coating composition according to one of the preceding claims, **characterized in that** the ceramic particles comprise between 0.1% and 45% w/w of corrosion inhibitor.

10. A coating composition according to one of the preceding claims, **characterized in that** the corrosion inhibitor is releasable in the presence of water.

11. A coating composition according to one of the preceding claims, **characterized in that** it is a hybrid organic/inorganic sol-gel coating.

12. A coating composition according to claim 11, **characterized in that** it contains at least an organic compound selected among the epoxy silanes.

13. A coating composition according to claim 11 or claim 12, **characterized in that** it contains at least one inorganic compound selected among the zirconium alkoxides.

14. A coating composition according to one of the claims 1 to 9, **characterized in that** it contains an organic resin.

15. A coating composition according to claim 14, **characterized in that** the organic resin is selected from the group consisting of epoxy, polyurethane, polyamine, vinyl, nitro-vinylic, acrylic, nitro-acrylic, vinyl-acrylic, phenolic, aminoacrylate, isocyanate, polyester, silicone, polyamide, alkyde and chlorinated resins, and mixtures thereof.

16. A coating composition according to one of the claims 1 to 9, **characterized in that** it is formulated using an inorganic matrix.

17. A coating composition according to one of the preceding claims, **characterized in that** it does not contain toxic amounts of hexavalent chromium.

18. A coating composition according to one of the preceding claims, **characterized in that** it is selected from the group consisting of paints, sol-gel coatings, varnish, lacquers and sealants.

19. Protective film obtained from a coating composition according to one of the preceding claims.

20. Use of a coating composition according to one of the preceding claims, to provide a metallic device with protection against corrosion.

## Patentansprüche

1. Beschichtungszusammensetzung, umfassend poröse Keramikpartikel, wobei die Partikel Poren umfassen, wobei mindestens zwei Korrosionsinhibitoren weitgehend homogen über jedes Partikel verteilt sind, wobei die Korrosionsinhibitoren in Gegenwart einer Flüssigkeit durch Solubilisierung in der Flüssigkeit freisetzbar sind, wobei die Keramikpartikel nach einem Sol-Gel-Verfahren zur Verkapselung der Korrosionsinhibitoren hergestellt werden und wobei die Korrosionsinhibitoren unterschiedliche Löslichkeiten in Wasser aufweisen.

2. Beschichtungszusammensetzung nach Anspruch 1, **dadurch gekennzeichnet, dass** es sich bei einem Korrosionsinhibitor um eine anorganische Verbindung handelt.

3. Beschichtungszusammensetzung nach Anspruch 2, **dadurch gekennzeichnet, dass** es sich bei einem Korrosionsinhibitor um ein Cersalz und/oder ein Molybdänsalz handelt.

4. Beschichtungszusammensetzung nach Anspruch 3, **dadurch gekennzeichnet, dass** ein Korrosionsinhibitor aus der Gruppe bestehend aus Ce(NO₃)₃, Ce₂(SO₄)₃, Ce(CHCO₂)₃, Ce₂(MoO₄)₃, Na₂MoO₄ oder Mischungen davon ausgewählt ist.

5. Beschichtungszusammensetzung nach einem der Ansprüche 1 bis 4, **dadurch gekennzeichnet, dass** es sich bei einem Korrosionsinhibitor um eine organische oder eine metallorganische Verbindung handelt.

6. Beschichtungszusammensetzung nach Anspruch 5, **dadurch gekennzeichnet, dass** ein Korrosionsinhibitor aus der Gruppe bestehend aus Benzotriazol, 2-Mercaptobenzotriazol, 8-Hydroxychinolin, 10-Methylphenothiazin, Cer(III)-salicylat, Cer(III)-2,4-pentandionat, deren Derivaten und Mischungen davon ausgewählt ist.

7. Beschichtungszusammensetzung nach einem der vorhergehenden Ansprüche, **dadurch gekennzeichnet, dass** sie Partikel aus Oxid, das aus einer Gruppe, die Siliciumdioxid, Organosiliciumdioxid, Zirconiumdioxid, Aluminiumoxid und Titandioxid enthält, ausgewählt ist, umfasst.

8. Beschichtungszusammensetzung nach Anspruch 7, **dadurch gekennzeichnet, dass** sie aus Siliciumdioxid oder Organosiliciumdioxid hergestellte Partikel enthält.

9. Beschichtungszusammensetzung nach einem der vorhergehenden Ansprüche, **dadurch gekennzeichnet, dass** die Keramikpartikel zwischen 0,1 % und 45 % w/w Korrosionsinhibitor umfassen.

10. Beschichtungszusammensetzung nach einem der vorhergehenden Ansprüche, **dadurch gekennzeichnet, dass** der Korrosionsinhibitor in Gegenwart von Wasser freisetzbar ist.

11. Beschichtungszusammensetzung nach einem der vorhergehenden Ansprüche, **dadurch gekennzeichnet, dass** es sich um eine organisch-anorganische Hybrid-Sol-Gel-Beschichtung handelt.

12. Beschichtungszusammensetzung nach Anspruch 11, **dadurch gekennzeichnet, dass** sie mindestens eine organische Verbindung, die aus den Epoxysilanen ausgewählt ist, enthält.

13. Beschichtungszusammensetzung nach Anspruch 11 oder 12, **dadurch gekennzeichnet, dass** sie mindestens eine anorganische Verbindung, die aus den Zirconiumalkoxiden ausgewählt ist, enthält.

14. Beschichtungszusammensetzung nach einem der Ansprüche 1 bis 9, **dadurch gekennzeichnet, dass** sie ein organisches Harz enthält.

15. Beschichtungszusammensetzung nach Anspruch 14, **dadurch gekennzeichnet, dass** das organische Harz aus der Gruppe bestehend aus Epoxid-, Polyurethan-, Polyamin-, Vinyl-, Nitrovinyl-, Acryl-, Nitroacryl-, Vinylacryl-, Phenol-, Aminoacrylat-, Isocyanat-, Polyester-, Silikon-, Polyamid-, Alkyd- und chlorierten Harzen und Mischungen davon ausgewählt ist.

16. Beschichtungszusammensetzung nach einem der Ansprüche 1 bis 9, **dadurch gekennzeichnet, dass** sie unter Verwendung einer anorganischen Matrix formuliert wird.

17. Beschichtungszusammensetzung nach einem der vorhergehenden Ansprüche, **dadurch gekennzeichnet, dass** sie keine toxischen Mengen von sechswertigem Chrom enthält.

18. Beschichtungszusammensetzung nach einem der vorhergehenden Ansprüche, **dadurch gekennzeichnet, dass** sie aus der Gruppe bestehend aus Anstrichmitteln, Sol-Gel-Beschichtungen, Klarlacken, Lacken und Dichtungsmitteln ausgewählt ist.

19. Schützender Film, erhalten aus einer Beschichtungszusammensetzung nach einem der vorhergehenden Ansprüche.

20. Verwendung einer Beschichtungszusammensetzung nach einem der vorhergehenden Ansprüche zum Versehen einer Metallvorrichtung mit Schutz gegen Korrosion.

## Revendications

1. Composition de revêtement comprenant des particules de céramique poreuses, lesdites particules comprenant des pores comportant au moins deux inhibiteurs de corrosion sensiblement répartis uniformément à travers chaque particule, lesdits inhibiteurs de corrosion pouvant être libérés à partir des pores en présence d'un liquide, par solubilisation dans ledit liquide, les particules de céramique étant préparées en utilisant un procédé sol-gel pour encapsuler les inhibiteurs de corrosion, et les inhibiteurs de corrosion ayant différentes solubilités dans l'eau.

2. Composition de revêtement selon la revendication 1, **caractérisée en ce qu'**un inhibiteur de corrosion est un composé inorganique.

3. Composition de revêtement selon la revendication 2, **caractérisée en ce qu'**un inhibiteur de corrosion est un sel de cérium et/ou un sel de molybdène.

4. Composition de revêtement selon la revendication 3, **caractérisée en ce qu'**un inhibiteur de corrosion est sélectionné dans le groupe constitué de Ce(NO₃)₃, Ce₂(SO₄)₃, Ce(CH₃CO₂)₃, Ce₂(MoO₄)₃, Na₂MoO₄, ou de mélanges de ceux-ci.

5. Composition de revêtement selon l'une des revendications 1 à 4, **caractérisée en ce qu'**un inhibiteur de corrosion est un composé organique ou organométallique.

6. Composition de revêtement selon la revendication 5, **caractérisée en ce qu'**un inhibiteur de corrosion est sélectionné dans le groupe constitué du benzotriazole, du 2-mercaptobenzotriazole, de la 8-hydroxyquinoline, de la 10-méthylphénothiazine, du salicylate de cérium (III), du 2,4-pentanedionate de cérium (III), de leurs dérivés, et de mélanges de ceux-ci.

7. Composition de revêtement selon l'une des revendications précédentes, **caractérisée en ce qu'**elle comprend des particules d'oxyde sélectionnées dans un groupe qui comprend la silice, l'organo-silice, la zircone, l'alumine et l'oxyde de titane.

8. Composition de revêtement selon la revendication 7, **caractérisée en ce qu'**elle contient des particules préparées à partir de silice ou d'organo-silice.

9. Composition de revêtement selon l'une des revendications précédentes, **caractérisée en ce que** les particules de céramique comprennent de 0,1 % à 45 % p/p d'inhibiteur de corrosion.

10. Composition de revêtement selon l'une des revendications précédentes, **caractérisée en ce que** l'inhibiteur de corrosion peut être libéré en présence d'eau.

11. Composition de revêtement selon l'une des revendications précédentes, **caractérisée en ce qu'**il s'agit d'un revêtement hybride de sol-gel organique/inorganique.

12. Composition de revêtement selon la revendication 11, **caractérisée en ce qu'**elle contient au moins un composé organique sélectionné parmi les époxysilanes.

13. Composition de revêtement selon la revendication 11 ou la revendication 12, **caractérisée en ce qu'**elle contient au moins un composé inorganique sélectionné parmi les alcoxydes de zirconium.

14. Composition de revêtement selon l'une des revendications 1 à 9, **caractérisée en ce qu'**elle contient une résine organique.

15. Composition de revêtement selon la revendication 14, **caractérisée en ce que** la résine organique est sélectionnée dans le groupe constitué de résines époxydes, de polyuréthane, de polyamine, vinyliques, nitro-vinyliques, acryliques, nitro-acryliques, vinyl-acryliques, phénoliques, d'aminoacrylate, d'isocyanate, de polyester, de silicone, de polyamide, d'alkyde et de résines chlorées, et de mélanges de celles-ci.

16. Composition de revêtement selon l'une des revendications 1 à 9, **caractérisée en ce qu'**elle est formulée en utilisant une matrice inorganique.

17. Composition de revêtement selon l'une des revendications précédentes, **caractérisée en ce qu'**elle ne contient pas de quantités toxiques de chrome hexavalent.

18. Composition de revêtement selon l'une des revendications précédentes, **caractérisée en ce qu'**elle est sélectionnée dans le groupe constitué de peintures, de revêtements sol-gel, de vernis, de laques et de matériaux d'étanchéification.

19. Film protecteur obtenu à partir d'une composition de revêtement selon l'une des revendications précédentes.

20. Utilisation d'une composition de revêtement selon l'une des revendications précédentes, pour apporter à un dispositif métallique une protection contre la corrosion.
